Europäisches Patentamt

European Patent Office

Office européen des brevets

(19)

(11) **EP 0 454 066 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.$^6$: **C08G 18/40**, C08G 18/78, B32B 17/10

(21) Anmeldenummer: **91106535.7**

(22) Anmeldetag: **23.04.1991**

(54) **Giessmasse auf Polyurethanbasis zur Herstellung von Verbundglasscheiben**

Polyurethane-based casting compositions for making laminated glasses

Masses à couler à base de polyuréthane pour la production d'un vitrage feuilleté

(84) Benannte Vertragsstaaten:
**DE DK FR GB NL**

(30) Priorität: **23.04.1990 DE 4012898**
**02.05.1990 DE 4014144**

(43) Veröffentlichungstag der Anmeldung:
**30.10.1991 Patentblatt 1991/44**

(73) Patentinhaber: **FLACHGLAS AKTIENGESELLSCHAFT**
**D-90762 Fürth (DE)**

(72) Erfinder: **Marquardt Reinhold, Dr. Dipl.- Ch.**
**W-4650 Gelsenkirchen (DE)**

(74) Vertreter: **Neidl-Stippler, Cornelia, Dr.**
**Rauchstrasse 2**
**D-81679 München (DE)**

(56) Entgegenhaltungen:
**EP-A- 0 116 924**     **EP-A- 0 141 407**
**EP-A- 0 191 666**     **DE-A- 2 903 221**

**Beschreibung**

Die Erfindung betrifft eine Gießmasse auf Polyurethanbasis insbesondere für den Verbund von Glasscheiben, sowie ihre Verwendung.

Gießmassen für den Verbund von Glasscheiben (wobei hier unter "Glas" Kunststoffe und auch anorganische Gläser verstanden werden) bspw. von Silicat- oder Polycarbonatscheiben mit Silicatglasscheiben sowie Verbundglasscheiben mit einer Polyurethanzwischenschicht zur Verbindung von Polycarbonat- und Silicatglasscheiben sind bekannt. Die Verbundglasscheiben mit Polycarbonatschichten dienen insbesondere zur Herstellung von sogenanntem einbruchhemmendem Verbundglas, Sicherheitsglas oder auch Panzerverbundglasscheiben. Derartiges Verbundsicherheitsglas findet z.B. auch seinen Einsatz bei Scheiben für Land-, Luft- und Wasserfahrzeuge.

Eine bekannte Möglichkeit der Verbindung von Silikatglasscheiben mit Polycarbonatscheiben mittels Polyurethan besteht in der Verwendung wärmeaktivierbarer Polyurethan-Klebefolien.

Aus der EP-A-32 329 sind Verbundglasscheiben unter Verwendung einer wärmeaktivierbaren Polyurethanklebefolie bekannt geworden. Die Folienkomponente, ein Polyurethanharz aus einer Polyolkomponente und einer Isocyanatkomponente mit teilweise blockierten Isocyanatgruppen und Kettenverlängerern wird durch eine thermische Behandlung, bei der die Isocyanatgruppen deblockiert werden, zur (wärmeaktivierten) Klebefolie, mit der die zu verbindenden Scheiben in der Wärme verklebt werden. Dabei kann die Polyolkomponente aus ein oder mehreren Polyolen bestehen, die eine Mischung aus Diolen und Triolen sein können. Als Isocyanatausgangskomponenten werden Isocyanate eingesetzt, die Harnstoffgruppen beinhalten.

Problematisch bei wärmeaktivierbaren Polyurethan-Klebefolien ist, daß sie nur bei Wärmeeinwirkung zufriedenstellend kleben - ihre Isocyanatfunktionen müssen mittels Wärme deblockiert werden. Dies bedeutet, daß ein Schritt des gemeinsamen gleichmäßigen Erwärmens aller Scheiben des Verbundglases gemeinsam mit der Folie notwendig ist. Beim Abkühlen des Verbundglases können aufgrund unterschiedlicher Ausdehnungskoeffizienten der verschiedenen eingesetzten Materialien Spannungen auftreten, die bis zur Ablösung der Schichten voneinander führen können.

Es ist auch nachteilig, daß für die Herstellung dieser Systeme Erwärmungsanlagen, beispielsweise Öfen, notwendig sind, die die Herstellungskosten der Scheiben erhöhen.

Eine andere Möglichkeit der Verbindung von Polycarbonat- mit Silikatglasscheiben mittels Polyurethan, die das Vorsehen von Erwärmungsschritten vermeidet, ist die Verwendung eines selbsthärtenden Polyurethan-Gießharzes, das zwischen die zu verbindenen Scheiben gegossen wird. Dieses Verfahren ist insofern vorteilhaft, als durch das Eingießen ein ganzflächiger Kontakt des Verbindungsmittels, des Polyurethans, mit den zu verbindenden Scheiben, der als Voraussetzung für den Zusammenhalt zu sehen ist, geschaffen wird. Dabei ist es günstig, wenn bei Raumtemperatur aushärtende gießfähige Polyurethan-Systeme eingesetzt werden, die gegenüber den wärmeaktivierbaren Klebefolien und auch den wärmevernetzbaren Polyurethangießharzen durch das Eingießen der Polyurethanausgangsmischung zwischen die zu verbindenden Scheiben ein Erwärmen des Scheibenverbundes vermieden werden kann und dadurch eine einfachere Herstellung, die keine großen thermischen Beanspruchungen des Verbundes hervorruft, erzielt werden kann. Thermische Spannungen in den fertiggestellten Verbundglasscheiben können dadurch weitgehend vermieden werden.

Aus der EP-A-83 017 sind Verbundscheiben aus mindestens zwei Glas- und/oder Kunststoffscheiben bekannt, die durch eine Zwischenschlcht aus einem selbsthärtenden, zinnkatalysierten Zweikomponenten-Polyurethangießharz auf Basis von mindestens trifunktionellen Polyalkylenen, Polyethern und cycloaliphatischen Diisocyanaten verbunden sind.

Aus der US-A-4 131 605 sind ebenfalls mittels eines Organozinnkatalysators zu härtende Polyurethan-Gießmassen bekannt geworden, die zum Verbinden von Polycarbonatscheiben mit Silicatglasscheiben bei Raumtemperatur dienen, wobei das Polyurethanausgangsmaterial bei Raumtemperatur aushärtet. Das dort beschriebene Polyurethan wird aus einem cycloaliphatischen Diisocyanat und einem Polyetherglykol hergestellt. Es handelt sich hierbei um ein aus nur zwei Komponenten hergestelltes Polyurethan, wobei der Einsatz nur weniger Komponenten die Lagerhaltungskosten und auch die Herstellungskosten der Ausgangsmischung vermindert.

Die DE-A-31 35 672 betrifft ein Polyurethansystem zum Verbinden von Carbonat- mit Silicatglasscheiben durch Eingießen des Polyurethans zwischen diese, das cyclische Isocyanate sowie eine Mischung von di- und trifunktionellen Polyolen als Ausgangsprodukte benötigt, wobei das Molekulargewicht der als difunktionelle Polyole eingesetzten Propylenoxidpolyether sehr hoch ist. Es ist hier notwenig, das Verbundsystem auf Temperaturen oberhalb der Raumtemperatur zu erwärmen, um ein zufriedenstellendes Aushärten zu ermöglichen. Derartige Erwärmungsschritte fordern eine aufwendige Verarbeitungsanlage mit großen Öfen.

Die DE-A-26 44 434 betrifft Polyurethan-Polyharnstoffe zur Herstellung von laminierten Schichtstoffen, insbesondere Verbundsicherheitsglasscheiben, wobei diese Polyurethanschicht insbesondere durch Vorsehen von freien COOH-Gruppen im ausgehärteten Polyurethan die Anhaftung des Polyurethans an den zu verbindenden Scheiben verbessern soll. Als Kettenverlängerer werden hier niedermolekulargewichtige Diamine eingesetzt. Derartige Diamine führen beim fertigen Polyurethan zu sprungartigen Änderungen im Ausdehnungskoeffizienten des Polyurethans in Abhängigkeit von der Temperatur, was bei thermischen Belastungen des derart hergestellten Verbundsicherheitsglases zu Ablösungen bzw. Auflösungen des Verbundes führen kann.

Aus der DE-A-26 60 346 ist ein der DE-A-26 44 434 ähnliches Polyurethansystem bekannt geworden, das ebenfalls zur besseren Haftung der zu verbindenden Gläser am Polyurethan freie Carboxylsäuregruppen enthält und mittels niedermolekulargewichtiger Diamine als Kettenverlängerer ausgehärtet wird.

Auch das derart hergestellte Polyurethan liefert Verbundglasscheiben, deren Eigenschaften bei größeren Temperaturschwankungen verbesserungsfähig sind.

Aus der EP-A-191666 sind durch Pulverbeschichtung aufgebrachte Polyurethanschichten zum Verbund von Glasscheiben bekanntgeworden, die aber nicht gießfähig sind und somit die oben aufgeführten Nachteile derartiger Systeme aufweisen. Dieses Dokument verwendet im Gegensatz zur Erfindung auch ein kurzkettiges Diol als Polyurethankomponente.

Für bestimmte Anwendungsfälle sind aus dem Stand der Technik photochrome Schichten auf Polyurethanbasis, die mindestens eine photochrome Substanz aufweist, die reversibel bei Bestrahlung im Sichtbaren oder nahen UV ihre Farbe ändert, bekanntgeworden. Sie sind bspw. bei Windschutzscheiben als Verbundgläser, die bei Bestrahlung ihre Farbe bzw. Absorptionsspektrum ändern, erwünscht. Die Farbänderung wird durch die photochemische Umwandlung von im Verbundglas vorhandenen photochromen organischen Substanzen, bspw. solchen, die ihre Farbe durch cis-trans-Umwandlung ändern oder auch solchen, die ihre Farbe durch Spaltung einer Bindung ändern, wobei der Effekt der Verfärbung reversibel sein muß, erzielt. Bei Verbundgläsern oder auch anderen Anwendungen von polyurethanbeschichteten Gläsern, wie Gläsern von Brillen, insbesondere auch preiswerten Schutzbrillen hat es sich als sinnvoll erwiesen, die photochromen Substanzen in Polymerschichten einzubetten. So empfiehlt bspw. die DD-PS 116 520, o-Nitro-Benzylverbindungen in Polyurethan als Wirtspolymer einzubringen, wobei es hier günstig erscheint, daß eine Polymermatrix eine dauernde und intensive Photochromie eingearbeiteter o-Nitrobenzylverbindungen bewirkt, wobei auch eine Teil-Immobilisierung der photochromen Substanz vorgeschlagen wird, wahrscheinlich, um ein Abdiffundieren von durch die Photonen erzeugten Radikalen zu vermeiden. Andererseits ist es aber auch notwendig, daß die photochrome Substanz nicht vollständig immobilisiert wird, weil dadurch sterische Änderungen des Moleküls, die für die Farbveränderung verantwortlich sind, unterdrückt werden und die Farbveränderung dadurch entsprechend der Restriktion der Konformationsumwandlung verlangsamt oder unterdrückt wird.

In ähnlicher Weise wurde auch in der EP-A-141 407 vorgeschlagen, die dort beschriebenen photochromen Substanzen in Polymere, wie auch Polyurethan, einzubetten, in denen sie ihren Photochromie-Effekt zeigen.

Bisher wurde sehr viel Wert auf die photochrome Substanz selbst gelegt. Es zeigte sich jedoch, daß auch die matrixbildende Wirtssubstanz, in der sich die photochrome Verbindung befindet, wichtig ist, wobei der Stand der Technik bisher keine Auswahl unter den unterschiedlichen Polyurethanen traf.

Es ist Aufgabe der Erfindung, ein Gießharzsystem auf Polyurethanbasis zu schaffen, das auf Glas haftende Schichten günstiger Eigenschaften und langer Lebensdauer schafft.

Die Aufgabe wird durch eine Gießmasse auf Polyurethanbasis nach Patentanspruch 1 gelöst.

Dabei ist es vorteilhaft, daß die Reste R und R'des Diisocyanats oder auch des Harnstoffaddukts des Diisocyanats, wobei diese gleich oder unterschiedlich sein können, ausgewählt sind aus der Gruppe der Kohlenwasserstoffreste mit 4 bis 12 C-Atomen.

Bevorzugt ist das Diisocyanat, das auch die Ausgangssubstanz des Harnstoffaddukts sein kann, ein lineares Diisocyanat, ausgewählt aus der Gruppe bestehend aus 2,4,4 Trimethylhexamethylen-1,6,-diisocyanat, Methylcyclohexandiisocyanat, Methylenbicyclohexan-4,4'-diisocyanat, Hexamethylendiisocyanat, Isophorondiisocyanat (3-Isocyanatomethyl-3,5,5,-trimethylcyclohexylisocyanat) und Diphenylmethandiisocyanat.

Bevorzugt wird als Polyetherdiol eines mit einem Molekulargewicht von 400 bis 800 und bevorzugt von 610 bis 690 eingesetzt.

Das bivalente Polyetherpolyol ist bevorzugt ein solches auf Basis des Polybutandiols oder des Polypropylenoxids mit einem Molekulargewicht von 300 bis 1200, bevorzugt 400 bis 800 und ganz besonders bevorzugt von 610 bis 690.

In der Ausgangsmischung des Polyurethans werden bevorzugt 55 bis 60 Gew.% Polyetherpolyol eingesetzt.

Als trifunktionelles Polyesterpolyol ist ein solches mit einem Molekulargewicht von 400 bis 600 und bevorzugt von 520 bis 560 günstig.

Weiterhin ist als trifunktionelles Polyol ein trivalentes Polyesterpolyol auf Basis von Polycaprolacton mit einem Molekulargewicht von etwa 540 ± 40 günstig.

Die trifunktionellen Polyole werden bevorzugt zu 8 bis 15 Gew.% und besonders bevorzugt zu 9 bis 13 Gew.% der Ausgangsmischung eingesetzt.

Das Diisocyanat kann Isophorondiisocyanat (3-Isocyanatomethyl-3,5,5,-trimethylcyclohexylisocyanat) mit einem Molekulargewicht von 222 sein.

Unter Harnstoffaddukten werden hier Addukte, also die Reaktionsproduktmischungen von Additionsreaktionen, bspw. der oben genannten linearen, Diisocyanate der allgemeinen Formel OCN-R-CNO verstanden, wobei R ein Kohlenwasserstoffrest mit 2 - 18 C-Atomen sein kann, mit Wasser zu mindestens einer Harnstoffgruppierung der allgemeinen Formel OCN-R-NH-CO-NH-R'-NCO (Dimeres) oder auch OCN-R-NH-CO-NH-R'NH-CO-NH-R''-NCO (Trimeres) oder auch OCN-R-NH-CO-NH-R'-NH-CO-NH-R''-NH-CO-NH-R'''-NCO verstanden, wobei die Reste R aus den für die Additionsreaktion eingesetzten Diisocyanaten stammen und gleiche oder unterschiedliche Alkylgruppen sein können.

Diese Addukte erhalten aufgrund der Gleichgewichtslage stets unpolymerisierte Mono-Diisocyanate als auch Trimere etc..

Bevorzugte Ausgangsverbindungen für diese hier als Präpolymere der Polyurethanherstellung eingesetzten Harnstoffaddukte sind unter anderem IPDI (Isophorondiisocyanat), HMDI (Hexamethylendiisocyanat), MDI (Diphenylmethandiisocyanat) od. dgl., die mit Wasser unter Abspaltung von Kohlenstoffdioxid die Harnstoffaddukte in einer Polymerisationsreaktion bilden. Eine typische Reaktion ist:

$$HMDI+IPDI+H_2O \rightarrow OCN\text{-}(CH_2)_6\text{-}NH\text{-}CO\text{-}NH\text{-}(C_{10}H_{18})NCO+CO_2$$

oder auch

$$HMDI+HMDI+H_2O \rightarrow OCN\text{-}(CH_2)_6\text{-}NH\text{-}CO\text{-}NH\text{-}(CH_2)_6\text{-}NCO+CO_2$$

oder

$$IPDI+MDI+H_2O \rightarrow OCN\text{-}(CH_2)_6\text{-}NH\text{-}CO\text{-}NH\text{-}(C_6H_4)_2\text{-}NCO+CO_2$$

etc., wobei diese Harnstoffaddukte bevorzugt ein mittleres Molekulargewicht von 200 bis 600, bevorzugt 300 bis 500 besitzen und festzustellen ist, daß sich in der Praxis bei derartigen als "Harnstoffaddukten" erhältlichen Produkten dieser Polymerisationsreaktion ein Gleichgewicht zwischen Mono-, Di- und Trimeren der Ausgangsmaterialien in den Harnstoffaddukten einstellt, wobei zwar meist die Dimere überwiegen, aber auch andere Mitglieder des Polymerisationsreaktionsgleichgewichts, die Tri- und Monomere zwar zu einem geringeren Anteil, aber dennoch stets vorhanden sind.

Aus diesem Grund werden bei derartigen Addukten stets "mittlere Molekulargewichte" angegeben, die sich aus den Molekulargewichten der in der Mischung vorhandenen Poly- und Monomeren errechnen. Das Harnstoffaddukt des Isocyanats ist bevorzugt ein Harnstoffaddukt des Isophorondiisocyanats, dessen Hauptbestandteil $OCN(C_{10}H_{18})NHCONH(C_{10}H_{18})NCO$ ist.

Für bestimmte Anwendungen bei photochromen Gläsern, bspw. zur Herstellung von Schichten zwischen oder auf Glasscheiben, wie Verbundglasscheiben mit Silikatglasscheiben oder Silikatglasscheiben und Polycarbonatscheiben oder auch Schichten auf Gläsern, wie Brillengläsern oder von Scheiben für Land-, Luft- und Wasserfahrzeuge, ist es günstig, wenn die Gießmasse zwischen 0,001 bis 25 Gew.% photochrome Substanzen, berechnet auf die Gesamtmenge, aufweist.

Durch die erfindungsgemäße Polyurethanmatrix wird ein erheblich beschleunigtes Ein- und Entfärbeverhalten erzielt, gegenüber herkömmlichen Polyurethanmatrices, die aufgrund ihrer starren Konfiguration eine Bewegung der Farbmoleküle behindern.

Geeignete photochrome Substanzen sind ausgewählt aus der Klasse der substituierten 1,3,5-Hexatriene; der substituierten 1,3-Cyclohexadiene; der substituierten Spirooxazine; der substituierten Spiro(1,8a)dihydroindolizine.

Ferner kann die erfindungsgemäße Gießmasse übliche Zusätze, ausgewählt aus ein oder mehreren Polymerisationsstartern, bevorzugt aus der Gruppe der Organometallverbindungen, wie der zinnorganischen Verbindungen; Antioxidationsmittel, bevorzugt phenolische Antioxidantien; UV-Absorptionsmittel, wie Triazole, sowie an sich bekannte Flammschutzmittel, wie halogenhaltige Verbindungen, chlorhaltige Phosphate, aufweisen.

Eine besonders bevorzugte Verwendung der Gießmasse ist zur Herstellung von Schichten zwischen oder auf Glasscheiben, wie Verbundglasscheiben mit Silikatglasscheiben oder Silikatglasscheiben und Polycarbonatscheiben oder auch Schichten auf Gläsern, wie Brillengläsern oder Windschutzscheiben, die dann auch photochromes Material enthalten können. Günstig läßt sich die erfindungsgemäße Gießmasse auch zur Bindung von Glasscheiben an Kathodenstrahlröhren, wie Fernsehröhren, die üblicherweise mindestens eine Vorsatzscheibe aufweisen, einsetzen.

Eine typische Verwendung dient zur Herstellung von Verbundglasscheiben mit Silikatglasscheiben und Polycarbonatscheiben, wobei eine Verbundglasscheibe etwa 12 bis 40 mm dick ist und beispielsweise Silikatglas- und Polycarbonatglasscheiben mit Stärken zwischen etwa 2 und 14 mm, die durch 1 bis 3 mm dicke Polyurethanschichten der Gießmasse verbunden sind, aufweist.

Das erfindungsgemäße Verfahren zur Herstellung einer Verbundglasscheibe mit Silikatglas- und Polycarbonatglasscheiben weist auf, daß die beiden zu verbindenden Scheiben unter gegenseitigem Abstand angeordnet werden; daß die Gießmasse zwischen die Scheiben eingegossen wird und sodann der Verbund bei Raumtemperatur stehengelassen wird.

Dadurch, daß das erfindungsgemäße Polyurethan bei Raumtemperatur innerhalb eines Zeitraums von ca 3 Std. zu einem transportfähigen Zustand aushärtet, wird eine temperaturspannungsfreie Verbindung von Polycarbonat- und Silicatglasscheiben erzielt, wodurch geringe Scherkräfte auf das Polyurethan bei Raumtemperatur ausgeübt werden. Dadurch kann Kantenrißbildung (Spannungsrißbildung über der Kante) und auch Rißbildung in der Polycarbonatscheibe durch Scherbelastung derselben bei Temperaturänderungen vermieden werden.

Beim Herstellen der Verbundglasscheiben ergibt sich insbesondere gegenüber den bei höheren Temperaturen auszuhärtenden Systemen ein geringerer Energieverbrauch, wobei erfindungsgemäß das Aushärten zur Transportfähigkeit bei Raumtemperatur in etwa 3 Stunden erzielt werden kann, während ein endgültiges Aushärten bzw. eine endgültige Polymerisation des Polyurethan-Systems in etwa 4 Wochen eintritt. Aufwendige Öfen oder Warmbehandlungsanlagen für das Verkleben mit wärmeaktivierbaren Polyurethanfolien können dadurch entfallen.

Das erfindungsgemäße Polyurethan besitzt ferner die vorteilhafte Eigenschaft, daß seine physikalischen Kenngrößen über einen sehr großen Temperaturbereich erhalten bleiben, d.h., daß bis zu etwa seinem Schmelz- und Zersetzungspunkt von 220 bis 250°C kein Weichwerden des Polyurethans auftritt, also die einbruchhemmenden bzw. Schußfestigkeitseigenschaften des Glases über den gesamten Temperaturbereich praktisch erhalten bleiben.

Die erfindungsgemäß eingesetzten Harnstoff-Derivate in der Ausgangsmischung sorgen dafür, daß das Erweichen des Materials erst bei relativ hohen Temperaturen auftritt.

Die mechanischen Eigenschaften des Verbundglases werden hier also nicht durch die (temperaturabhängige) Kristallstruktur des Polyurethans bestimmt, sondern durch dessen Vernetzungsgrad.

Vorteilhafterweise wird bei einer derartigen Gießmasse, mindestens eine photochrome Substanz als Zusatz eingebracht. Dadurch, daß erfindungsgemäß nun eine bevorzugte Polyurethangruppe aus der umfangreichen Stoffgruppe möglicher Polyurethane ausgewählt wird, die keine Kettenverlängerer aufweist und somit andere physikalische Eigenschaften als die bisher bekannten Polyurethanschichten für Glas aufweist, also insbesondere flexibel ist und in der wenig quasikristalline Bereiche auftreten, wird eine Matrix zur Verfügung gestellt, die als unsegmentiertes Polyurethan dem in ihr eingebetteten photochromen Stoff oder Stoffmischung eine erhöhte Beweglichkeit in der Matrix verleiht bzw. weniger kristallin ist und dadurch auch eine schnellere Ansprechzeit der photochromen Verbindung, da sich die Farbänderung gleichzeitig mit einer sterisch-geometrischen Änderung im Farbstoffmolekül vollzieht, ermöglicht. Diese Ansprechzeit ist bspw. für Anwendungen wie photochrome Windschutzscheiben oder auch photochrome Schutzbrillen, Sportbrillen od. dgl., bei denen ein schneller Wechsel von Hell/Dunkel erfolgen kann, wesentlich.

Besonders geeignete photochrome Verbindungen zur Verwendung in dem erfindungsgemäßen Gießharz sind dem Fachmann geläufig und umfassen u.a.: substituierte 1,3,5 - Hexatriene; substituierte 1,3-Cyclohexadiene; substituierte Spirooxazine; substituierte Spiro (1,8a)di-hydroindolizine; es können aber auch andere photochrome Substanzen, wie sie bspw. aus der DD-116520 oder der EP-A-0141407, der Japan Kokai Tokyo Koho JP 59135152 bekannt sind, also Heliochrom, Chromen, Spirooxazine etc., eingesetzt werden.

Dadurch, daß erfindungsgemäß gefunden wurde, daß gerade das unsegmentierte Polyurethan in überraschender Weise schnelle Farbreaktionen ermöglicht, ist nun eine verbesserte Ansprechzeit für photochrome Verbundglasscheiben, die Polyurethankleber erhalten, möglich.

Dabei ist darauf hinzuweisen, daß das erfindungsgemäße Polyurethan keine Kettenverlängerer, also mehrwertige Alkohole oder Amine mit einem Molekulargewicht von unter 100, wie Ethylenglykol, Propylenglykol, Butandiol, Hexandiol oder entsprechende Amine, aufweist. Diese Kettenverlängerer bilden bei den herkömmlichen Polyurethanen mit der Isocyanatkomponente ein sogenanntes Hartsegment, also mikrokristalline Strukturen, die dem Polyurethan eine höhere Festigkeit und eine geringere innere Beweglichkeit der einzelnen Ketten verleihen.

Für die meisten photochromen Substanzen ist aber eine gewisse Beweglichkeit des Farbmoleküls erforderlich, da ein im Normalzustand möglichst farbloses Molekül durch Absorption von Licht in ein farbiges Molekül umgewandelt werden soll. Dies erfordert eine relative freie Beweglichkeit des farbgebenden Stoffes. Offensichtlich kann ein in einer starren, mikrokristallinen Matrix eingebettetes Farbmolekül, das in seiner Beweglichkeit sehr eingeschränkt ist, nur erheblich langsamer umgewandelt werden als ein Molekül, das in einem Weichsegment vorliegt. Demzufolge werden Polyurethane, die ein Hartsegment enthalten, durch UV-A-Licht langsamer eingefärbt und natürlich auch entsprechend langsamer entfärbt. Gerade diese Reaktionszeit für den Zyklus eingefärbt/farblos ist aber z.B. für den Kraftfahrzeug-Sektor ein wesentlichens Kriterium. So kann ein tief eingefärbtes photochromes Verbundglas bei plötzlicher Änderung der Umgebungshelligkeit, wie beim Einfahren in einen Tunnel oder eine Unterführung viel zu lichtundurchlässig bleiben. Die folge ist, daß der Fahrer eines solchen Fahrzeugs keinen Sichtkontakt mehr nach außen hat. Ähnliche Effekte können, wenn auch nicht so ausgeprägt, bei lockerer bis mittlerer Bewölkung auftreten. Bei direkter Sonneneinstrahlung verfärbt sich das Verbundglas langsam und entfärbt sich bei Aodeckung der Sonne und mithin geringerer Helligkeit auch nur langsam. Unsegmentierte Polyurethane haben hier den Vorteil einer viel höheren Reaktivität und eignen sich wesentlich besser als Trägermatrix für photochrome Farbstoffe.

Vorteilhafterweise liegt dabei die photochrome Substanz oder Substanzmischung in einer Menge von 0,001 bis 25 Gew.% des Polyurethans vor.

Erfindungsgemäß wird beim Verbinden der Einzelkomponente einer Verbundglasscheibe mit Silikatglas- und Polycarbonatglasscheiben so verfahren, daß die beiden zu verbindenden Scheiben unter gegenseitigem Abstand angeordnet werden; die erfindungsgemäße Gießmasse zwischen die Scheiben eingegossen wird und sodann der Verbund bei Raumtemperatur stehengelassen wird.

Demzufolge sind auch die Farbveränderungen der phototropen Substanzen im Polyurethan über einen größeren Temperaturbereich recht gleichmäßig.

Ein weiterer Vorteil des erfindungsgemäßen Systems ist die geringe Viskosität der Ausgangsmischung, die zu einem leichten und schnellen Eingießen der Polyurethan-Ausgangsmischung zwischen die beiden Scheiben ohne Blasenbildung führt und dadurch die Verarbeitung erleichtert.

Die mechanischen Eigenschaften des Verbundglases werden hier also nicht durch die (temperaturabhängige) Kristallstruktur des Polyurethans bestimmt, sondern durch dessen Vernetzungsgrad.

Nachfolgend soll die Erfindung anhand von Ausführungsbeispielen näher erläutert werden.

Beispiel 1

Herstellung einer Verbundglasscheibe

57,1 g bivalentes Polyetherpolyol mit einem mittleren Molekulargewicht von 650 g/Mol auf Basis von Polybutandiol (im Handel unter der Bezeichnung Terathane 650 von der Fa. DuPont erhältlich) sowie 10,5 g eines trivalenten Polyesterpolyols des mittleren Molekulargewichts von 540 g/Mol auf Basis von Polycaprolacton (im Handel unter den Bezeichnungen Thone 305 von der Fa. United Carbide oder Placcel 305 von der Fa. Daiccel erhältlich) sowie 24,6 g einer Lösung eines linearen Harnstoffaddukts von Isophorondiisocyanat in Isophorondiisocyanat des mittleren Molekulargewichts von 350 g/Mol (Isophorondiisocyanatanteil in der Losung ist etwa 30%) (erhältlich von der Fa. Hüls Chemie unter der Bezeichnung H 2921) sowie 7,8 g Isophorondiisocyanat des Molekulargewichts 222 g/Mol werden mit 0,5 g Zinndioctoat unter Vakuum bei Raumtemperatur vermischt und die resultierende Mischung sogleich zwischen eine 10 cm x 10 cm Silikatglasscheibe der Dicke 4 mm und eine Polycarbonatscheibe mit 10 cm x 10 cm der Dicke 4 mm, die auf einem gegenseitigen Abstand von 1 mm im wesentlichen parallel zueinander gehalten sind, eingegossen und 3 Stunden in der Waagerechten liegengelassen. Der nach 3 Stunden erhaltene Verbund war glasklar. Nach Aushärten bei Raumtemperatur über 3 Wochen zeigte der Verbund ausgezeichnete Eigenschaften.

Das gemessene Streulicht lag unter 5 %, die Lichttransmission lag bei 90 % (Normlichtart A nach DIN). Nach Lagerung in 20 Zyklen zu 6 Stunden mit den Grenzen -40°C und +100°C konnten keine Ablösungen oder andere optische Fehler erkannt werden. Das Polyurethan selbst zeigte eine Shore-Härte vom 55. Die Dehnung bei Raumtemperatur betrug mehr als 1000%. Eine Untersuchung mittels Differentialthermoanalyse zeigte keine Phasenumwandlungen zwischen 0°C und 220°C.

Beispiel 2

Herstellung einer Verbundglasscheibe

Es wurden 55 g Polyetherdiol mit einem mittleren Molekulargewicht von 300 mit 15 g eines Polyestertriols mit einem mittleren Molekulargewicht von 300 sowie 27 g eines Harnstoffaddukts von Hexamethylendiisocyanat mit einem Molekulargewicht von 439 g/Mol sowie 6,7 g Isophorondiisocyanat mit 0,5 g Dibutylzinndilaurat vermischt und zwischen eine mit einem gegenseitigen Abstand von 2 mm parallel gehaltene 30 cm x 30 cm Polycarbonatscheibe mit einer Dicke von 2 mm und eine 30 cm x 30 cm Silikatglasscheibe mit einer Dicke von 4 mm gegossen. Der schlierenfreie Verbund wurde drei Stunden lang waagerecht bei Raumtemperatur gelagert.

Nach vierwöchiger Lagerung wurde der Verbund auf Durchschlagfestigkeit mit einer Kugel von 4,11 kg aus einer Fallhöhe von 9,50 m geprüft. Es erfolgte kein Durchschlag nach dreimaliger Wiederholung.

Beispiel 3

Herstellung einer Verbundglasscheibe.

Es wurde ein Polyurethan gemäß Beispiel 1 formuliert, jedoch an Stelle eines Addukts von Isophorondiisocyanat ein Harnstoffaddukt des Hexamethylendiisocyants, das eine 1:1-Mischung des Dimeren mit dem Trimeren von Hexamethylendiisocyanat war, mit einem mittleren Molekulargewicht von ca. 382 benutzt. Der Verbund zeigte nach dem Aushärten eine Lichttransmission von 90 % bei einem Streulichtanteil von weniger als 0,5 % (Normlichtart A nach DIN). Nach zwei Wochen Temperaturwechsellagerung in den Grenzen von -40°C / +100°C konnten keine Ablösungen des Polyurethans beobachtet werden.

Beispiel 4

Herstellung einer Verbundglasscheibe mit verringerter UV-Transmission

Es wurde ein Polyurethan gemäß Beispiel 1 formuliert, jedoch wurden zusätzlich 0,25 Gew.% eines Triazols als UV-Absorptionsmittel (Tinuvin 328 der Fa. CIBA-GEIGY) zugesetzt. Nach dem Aushärten zeigte der Verbund eine Transmission für UV-Licht von weniger als 5 %.

Beispiel 5

Herstellung einer flammhemmenden Verbundglasscheibe

Es wurde ein Polyurethan gemäß Beispiel 1 formuliert, jedoch wurden 2 Gew.% eines chlorhaltigen Phosphats (Disflamoll TCA der Fa. Bayer AG) zugesetzt. Der Verbund zeigt nach dem Aushärten eine Lichttransmission von 90 %. Solche Laminate waren nach dem Anzünden mit einer offenen Flamme selbstverlöschend.

Beispiel 6

Herstellung einer photochromen Verbundglasscheibe

Es wurden 55 g Polyetherdiol mit einem mittleren Molekulargewicht von 300 mit 15 g eines Polyestertriols mit einem mittleren Molekulargewicht von 300 sowie 27 g eines Harnstoffaddukts von Hexamethylendiisocyanat mit einem mittleren Molekulargewicht von 439 g/Mol, das bereits in Beispiel 3 verwendet wurde, sowie 6,7 g Isophorondiisocyanat mit 0,5 g Dibutylzinndilaurat sowie 15 Gew.% eines photochromen substituierten 1,3,5 Hexatriens (aberochrom 540-999) vermischt und zwischen eine mit einem gegenseitigen Abstand von 2 mm parallel gehaltene 30 cm x 30 cm Polycarbonatscheibe mit einer Dicke von 2 mm und eine 30 cm x 30 cm Silikatglasscheibe mit einer Dicke von 4 mm gegossen. Der schlierenfreie Verbund wurde drei Stunden lang waagerecht bei Raumtemperatur gelagert.

Nach vierwöchiger Lagerung wurde der Verbund auf Durchschlagfestigkeit mit einer Kugel von 4,11 kg aus einer Fallhöhe von 9,50 m geprüft. Es erfolgte kein Durchschlag nach dreimaliger Wiederholung. Ferner wurde die Scheibe einer UV-A-Bestrahlung (Bestrahlung mit einer 300 W UV-Lampe in einem Abstand von 0,1 m) ausgesetzt und dunkelte sich schnell ab. Nach Absetzen der Bestrahlung erfolgte schnell eine vollständige Aufhellung. Dieser Zyklus war über 100.000 Bestrahlungszyklen konstant und reversibel.

Beispiel 7

Herstellung einer photochromen Verbundglasscheibe.

Es wurde ein Polyurethan gemäß Beispiel 1 formuliert, jedoch an Stelle eines Harnstoffaddukts von Isophorondiisocyanat ein Harnstoffaddukt des Hexamethylendiisocyants, wie in Beispiel 3 verwendet, benutzt. Als photochrome Substanz wurde 0,10 Gew.% eines substituierten Spirooxazins eingesetzt. Der Verbund zeigte nach dem Aushärten eine gute Einfärbung bei UV-A-Lichteinfall. Nach zwei Wochen Temperaturwechsellagerung in den Grenzen von -40°C / +100°C konnten keine Ablösungen des Polyurethans beobachtet werden. Ebenfalls wurde bei Bestrahlung mit einer UV-Lampe mit 300 Watt in einem Abstand von 0,1 m eine vollständige Farbänderung innerhalb von 5 sec. beobachtet, wobei nach Ausschalten der Bestrahlung innerhalb von 20 sec. eine vollständige Aufhellung zu beobachten war.

Beispiel 8

Herstellung einer photochromen Kunstglasverbundglasscheibe

Es wurde eine 0,2 mm dicke Polycarbonatschicht mit einer weiteren Polycarbonatplatte gleicher Dicke über eine 0,5 mm dicke Gießharzschicht mit 0,15 Gew.% eines substituierten Spiro(1,8a)dihydroindolizins verbunden und aus diesem Verbund eine Kunststoff-Sportbrille in an sich bekannter Weise hergestellt. Dieses Material zeigte bei großer Leichtigkeit und gleichzeitiger Bruchfestigkeit ein schnelles Ansprechen auf Hell-Dunkel-Unterschiede.

**Patentansprüche**

1. Gießmasse auf Polyurethanbasis, insbesondere für den Verbund von Glasscheiben, gekennzeichnet durch Umsetzen einer Kombination von

- 50 bis 65 Gew.% eines difunktionellen Polyetherdiols mit einem Molekulargewicht von 300 bis 1200;
- 5 bis 20 Gew.% eines trifunktionellen Polyesterpolyols mit einem Molekulargewicht von 300 - 700;
- wobei das Verhältnis der Äquivalente di- zu trifunktioneller Polyole zwischen 2: 1 und 5:1 liegt, und
- 2 bis 28 Gew..% eines Harnstoffaddukts eines Diisocyanates, dessen Hauptbestandteil der allgemeinen Formel OCN-R-NH-CO-NH-R'-NCO entspricht, wobei R und R' gleich oder unterschiedlich sind und ein geradkettiger, verzweigter, cyclischer oder aromatischer Kohlenwasserstoffrest mit 2 bis 18 Kohlenstoffatomen ist, und
- 2 bis 28 Gew.% eines Diisocyanats ausgewählt aus der Gruppe bestehend aus Diisocyanaten der allgemeinen Formel OCN-R-NCO, wobei R ein geradkettiger , verzweigter, cyclischer oder aromatischer Kohlenwasserstoffrest mit 2 bis 18 Kohlenstoffatomen ist,
- wobei das Äquivalenzverhältnis des Harnstoffaddukts zum Diisocyanat 1 : 0,2 bis 0,2 : 1 ist und die Summe der Gewichtsprozentzahlen stets 100 ergibt, mit Hilfe eines Katalysators.

2. Gießmasse nach Anspruch 1, dadurch gekennzeichnet, daß die Reste R und R' gleich oder unterschiedlich sind und Kohlenwasserstoffreste mit 4 bis 12 C-Atomen sind.

3. Gießmasse nach Anspruch 1 oder 2, dadurch gekennzeichnet, daß das Diisocyanat ausgewählt ist aus der Gruppe bestehend aus 2,4,4 Trimethylhexamethylen-1,6-diisocyanat, Methylcyclohexandiisocyanat, Methylenbicyclohexan-4,4'-diisocyanat, Hemamethylendiisocyanat, Isophorondiisocyanat (3-Isocyanatomethyl-3,5,5-trimethy1cyclohexylisocyanat) und Diphenylmethandiisocyanat.

4. Gießmasse nach einem der vorangehenden Ansprüche, dadurch gekennzeichnet, daß das Polyetherdiol ein Molekulargewicht von 400 bis 800 und bevorzugt von 610 bis 690 aufweist.

5. Gießmasse nach einem der vorangehenden Ansprüche, dadurch gekennzeichnet, daß das Diol ein bivalentes Polyetherpolyol auf Basis des Polybutandiols oder des Polypropylenoxids mit einem Molekulargewicht von 300 bis 1200, bevorzugt 400 bis 800 und ganz besonders bevorzugt von 610 bis 690 ist.

6. Gießmasse nach einem der vorangehenden Ansprüche, dadurch gekennzeichnet, daß die Ausgangsmischung 55 bis 60 Gew.% Polyetherpolyol aufweist.

7. Gießmasse nach einem der vorangehenden Ansprüche, dadurch gekennzeichnet, daß das trifunktionelle Polyesterpolyol ein Molekulargewicht von 400 bis 600 und bevorzugt von 520 bis 560 aufweist.

8. Gießmasse nach einem der vorangehenden Ansprüche, dadurch gekennzeichnet, daß das trifunktionelle Polyesterpolyol ein Polyesterpolyol auf Basis von Polycaprolacton mit einem Molekulargewicht von etwa 540 ± 40 ist.

9. Gießmasse nach einem der vorangehenden Ansprüche, dadurch gekennzeichnet, daß 8 bis 15 Gew.% und bevorzugt 9 bis 13 Gew.% eines trifunktionellen Polyesterpolyols eingesetzt werden.

10. Gießmasse nach einem der vorangehenden Ansprüche, dadurch gekennzeichnet, daß die Gießmasse 0,001 bis 25 Gew.% photochrome Substanzen, berechnet auf die Gesamtmenge, aufweist.

11. Gießmasse nach Anspruch 8, dadurch gekennzeichnet, daß die phototrope Substanz ausgewählt ist aus der Klasse der substituierten 1,3,5-Hexatriene, der substituierten 1,3-Cyclohexadiene, der substituierten Spirooxazine und der substituierten Spiro(1,8a)dihydroindolizine.

12. Gießmasse nach einem der vorangehenden Ansprüche, dadurch gekennzeichnet, daß sie bis etwa 5 Gew.% übliche Zusätze, vorzugsweise Antioxidationsmittel, UV-Stabilisatoren und Flammschutzmittel aufweist.

13. Gießmasse nach einem der vorangehenden Ansprüche, dadurch gekennzeichnet, daß die Zusätze zur Gießmasse ausgewählt sind aus: ein oder mehreren Polymersationsstartern, bevorzugt aus der Gruppe der Organometallverbindungen, vorzugsweise der zinnorganischen Verbindungen; Antioxidationsmitteln, bevorzugt phenolischen Antioxidantien; UV-Absorptionsmitteln, vorzugsweise Triazolen; sowie an sich bekannten Flammschutzmitteln, vorzugsweise halogenhaltigen Flammschutzmitteln, insbesondere chlorhaltigen Phosphaten.

14. Verwendung der Gießmasse nach einem der vorangehenden Ansprüche zur Herstellung von Schichten zwischen oder auf Glasscheiben, vorzugsweise Verbundglasscheiben mit Silikatglasscheiben oder Silikatglasscheiben und Polycarbonatscheiben oder auch Schichten auf Gläsern, vorzugsweise Brillengläsern oder von Scheiben für Land- , Luft- und Wasserfahrzeuge.

**Claims**

1. Coating substance based on polyurethane, more especially for the bonding of glass panes, characterised by converting a combination of

   - 50 to 65 % by wt. of a difunctional polyetherdiol having a molecular weight of 300 to 1200;
   - 5 to 20 % by wt. of a trifunctional polyester polyol having a molecular weight of 300 - 700;
   - the ratio of the equivalent di- to trifunctional polyols being between 2 : 1 and 5 : 1, and
   - 2 to 28 % by wt. of a urea adduct of a diisocyanate, the main ingredient of which corresponds to the general formula OCN-R-NH-CO-NH-R'-NCO, wherein R and R' are identical or different, and is a straight-chained, branched, cyclical or aromatic hydrocarbon radical having 2 to 18 carbon atoms, and
   - 2 to 28 % by wt. of a diisocyanate selected from the group including diisocyanates of the general formula OCN-R-NCO, wherein R is a straight-chained, branched, cyclical or aromatic hydrocarbon radical having 2 to 18 carbon atoms,
   - the equivalent ratio of the urea adduct to the diisocyanate being between 1 : 0.2 and 0.2 : 1, and the sum of the percentages by weight always amounting to 100, by means of a catalyst.

2. Coating substance according to claim 1, characterised in that the radicals R and R' are identical or different and are hydrocarbon radicals having 4 to 12 C atoms.

3. Coating substance according to claim 1 or 2, characterised in that the diisocyanate is selected from the group including 2,4,4 trimethylhexamethylene-1,6-diisocyanate, methylcyclohexanediisocyanate, methylenebicyclohexane-4,4'-diisocyanate, hexamethylenediisocyanate, isophorondiisocyanate (3-isocyanatomethyl-3,5,5-trimethylcyclohexylisocyanate) and diphenylmethanediisocyanate.

4. Coating substance according to one of the preceding claims, characterised in that the polyetherdiol has a molecular weight of between 400 and 800 and preferably between 610 and 690.

5. Coating substance according to one of the preceding claims, characterised in that the diol is a bivalent polyetherpolyol based on polybutanediol or polypropyleneoxide having a molecular weight of between 300 and 1200, preferably between 400 and 800 and quite specifically preferably between 610 and 690.

6. Coating substance according to one of the preceding claims, characterised in that the basic mixture includes 55 to 60 % by wt. polyetherpolyol.

7. Coating substance according to one of the preceding claims, characterised in that the trifunctional polyesterpolyol has a molecular weight of between 400 and 600, and preferably between 520 and 560.

8. Coating substance according to one of the preceding claims, characterised in that the trifunctional polyesterpolyol is a polyesterpolyol based on polycaprolactone having a molecular weight of substantially 540 ± 40.

9. Coating substance according to one of the preceding claims, characterised in that 8 to 15 % by wt. and preferably 9 to 13 % by wt. of a trifunctional polyesterpolyol are used.

10. Coating substance according to one of the preceding claims, characterised in that the coating substance includes 0.001 to 25 % by wt. photochromic substances, calculated on the basis of the total quantity.

11. Coating substance according to claim 8, characterised in that the phototropic substance is selected from the class of substituted 1,3,5-hexatrienes, substituted 1,3-cyclohexadienes, substituted spirooxazines and substituted spiro(1,8a)dihydroindolizines.

12. Coating substance according to one of the preceding claims, characterised in that it includes up to substantially 5 % by wt. conventional additives, preferably antioxidising agents, UV stabilisers and fireproofing agents.

13. Coating substance according to one of the preceding claims, characterised in that the additions to the coating substance are selected from: one or more polymerisation initiators, preferably from the group of organometal compounds, preferably tin organic compounds; antioxidising agents, preferably phenolic antioxidants; UV absorption agents, preferably triazols; as well as fireproofing agents known per se, preferably fireproofing agents containing halogen, more especially phosphates containing chlorine.

14. Use of the coating substance according to one of the preceding claims for the production of layers between or on glass panes, preferably composite glass panes with silicate glass panes or silicate glass panes and polycarbonate panes or also layers on glasses, preferably spectacle lenses or panes for vehicles used on land, in the air and on water.

**Revendications**

1. Matière à couler à base de polyuréthannes, convenant en particulier à l'utilisation pour le collage de glaces, caractérisée par

la réaction d'une combinaison de

- 50 à 65 % en poids d'un polyétherdiol difonctionnel de poids moléculaire 300 à 1200 ;
- 5 à 20 % en poids d'un polyesterpolyol trifonctionnel de poids moléculaire 300 à 700 ;
- avec un rapport de 2 : 1 à 5 : 1 entre les équivalents de polyol difonctionnel et les équivalents de polyol trifonctionnel, et
- 2 à 28 % en poids d'un adduct du type urée d'un diisocyanate, dont le constituant principal répond à la formule générale OCN-R-NH-CO-NH-R'-NCO dans laquelle R et R', ayant des significations identiques ou différentes, représentent chacun un radical hydrocarboné à chaîne droite, ramifiée, cyclique ou aromatique en C2-C18 et
- 2 à 28 % en poids d'un diisocyanate choisi dans le groupe consistant en les diisocyanates de formule générale OCN-R-NCO dans laquelle R représente un radical hydrocarboné à chaîne droite, ramifiée, cyclique ou aromatique en C2-C18,
- à un rapport de 1 : 0,2 à 0,2 : 1 entre les équivalents de l'adduct du type urée et les équivalents de diisocyanate, la somme des pourcentages en poids étant toujours égale à 100, sous l'action d'un catalyseur.

2. Matière à couler selon la revendication 1, caractérisée par le fait que les symboles R et R', ayant des significations identiques ou différentes, représentent chacun un radical hydrocarboné en C4-C12.

3. Matière à couler selon la revendication 1 ou 2, caractérisée par le fait que le diisocyanate est choisi dans le groupe consistant en le 2,4,4-triméthylhexaméthylène-1,6-diisocyanate, le méthylcyclohexanediisocyanate, le méthylènebicyclohexane-4,4'-diisocyanate, l'hexaméthylènediisocyanate, l'isophoronediisocyanate (3-isocyanatométhyl-3,3,5-triméthylcyclohexylisocyanate) et le diphénylméthanediisocyanate.

4. Matière à couler selon une des revendications qui précèdent, caractérisé par le fait que le polyétherdiol a un poids moléculaire de 400 à 800 et de préférence de 610 à 690.

5. Matière à couler selon une des revendications qui précèdent, caractérisée par le fait que le diol est un polyétherpolyol bivalent à base du polybutanediol ou de l'oxyde de polypropylène à un poids moléculaire de 300 à 1200, de préférence de 400 à 800 et tout spécialement de 610 à 690.

6. Matière à couler selon une des revendications qui précèdent, caractérisée par le fait que le mélange de départ contient 55 à 60 % en poids de polyétherpolyol.

7. Matière à couler selon une des revendications qui précèdent, caractérisée par le fait que le polyesterpolyol trifonctionnel a un poids moléculaire de 400 à 600, de préférence de 520 à 560.

8. Matière à couler selon une des revendications qui précèdent, caractérisée par le fait que le polyesterpolyol trifonctionnel est un polyesterpolyol à base de la polycaprolactone ayant un poids moléculaire d'environ 540 ± 40.

9. Matière à couler selon une des revendications qui précèdent, caractérisée par le fait que l'on met en oeuvre de 8 à 15 % en poids et de préférence de 9 à 13 % en poids d'un polyesterpolyol trifonctionnel.

10. Matière à couler selon une des revendications qui précèdent, caractérisée par le fait qu'elle contient de 0,001 à 25 % en poids de substances photochromes, sur la quantité totale.

11. Matière à couler selon la revendication 8, caractérisée par le fait que la substance phototrope est choisie dans la classe des 1,3,5-hexatriènes substitués, des 1,3-cyclohexadiènes substitués, des spirooxazines substituées et des spiro(1,8a) dihydroindolizines substituées.

**12.** Matière à couler selon une des revendications qui précèdent, caractérisée par le fait qu'elle contient jusqu'à environ 5 % en poids d'additifs usuels, de préférence des agents antioxydants, des stabilisants contre les UV et des agents ignifugeants.

**13.** Matière à couler selon une des revendications qui précèdent, caractérisée par le fait que les additifs à la matière à couler sont choisis parmi : un ou plusieurs inducteurs de polymérisation pris de préférence dans le groupe des composés organométalliques, de préférence les composés organiques de l'étain ; les agents antioxydants, de préférence les agents antioxydants phénoliques ; les absorbeurs d'UV, de préférence des triazoles ; et des agents ignifugeants connus en soi, de préférence des agents ignifugeants halogénés, plus spécialement des phosphates chlorés.

**14.** Utilisation de la matière à couler selon une des revendications qui précèdent pour l'application de couches entre des glaces ou sur des glaces, de préférence des glaces composites à glaces en verres de silicates ou à glaces en verres de silicates et glaces de polycarbonates ou entre des couches ou sur des couches de verres, de préférence des verres de lunettes ou des glaces de véhicules terrestres, aériens et maritimes.